# EUROPEAN PATENT APPLICATION

(11) **EP 4 592 122 A1**
(43) Date of publication of application: **30.07.2025**
(21) Application number: 25153390.7
(22) Date of filing: 22.01.2025
(51) Int. Cl.: B60K 35/10, B60K 35/21, B60K 35/22, B60K 35/26

(54) **INFORMATION PROCESSING DEVICE, INFORMATION PROCESSING METHOD, AND NON-TRANSITORY STORAGE MEDIUM**

(30) Priority: 29.01.2024 JP 2024011253
(71) Applicant: TOYOTA JIDOSHA KABUSHIKI KAISHA, Aichi-ken, 471-8571 (JP)
(72) Inventor: TAKADA, Arata, TOYOTA-SHI, AICHI-KEN, 471-8571 (JP); SADAKUNI, Yudai, TOYOTA-SHI, AICHI-KEN, 471-8571 (JP)
(74) Representative: Cabinet Beau de Loménie

(57) **Abstract**

lAn information processing device (50) comprises a control unit (51B, 51C). The control unit (51B, 51C) executes a practice mode for practicing at least one of an autonomous driving function or a driving assistance function of a vehicle (10), and outputs, from an output device (30), output content according to whether or not an input operation of a user, to a specific operation related to execution of the autonomous driving function or the driving assistance function instructed in the practice mode, is correct.

## Description

### BACKGROUND

### Technical Field

The present disclosure relates to an information processing device, an information processing method, and a non-transitory storage medium.

### Related Art

For example, a driving assistance device capable of performing practice for driving assistance with good efficiency is disclosed in Japanese Patent Application Laid-Open (JP-A) No. 2022-159189.

However, users that perform such practice are assumed to not be familiar with the use of driving assistance functions.

This means that in such practice there might be cases in which these users perform a correct operation related to execution of the driving assistance function, and cases in which these users perform a mistaken operation related thereto.

JP-A No. 2022-159189 only discloses output examples of cases in which a user has performed a correct operation in such practice, and so there is a concern that the interest of a user in practicing might fall due to responses to operations of the user being standard responses.

The present disclosure accordingly provides an information processing device, an information processing method, and a non-transitory storage medium that are capable of raising the level of interest of a user in practicing compared to cases in which standard responses are given to operations of the user when a user is practicing at least one of an autonomous driving function or a driving assistance function of a vehicle.

### SUMMARY

An information processing device of a first aspect includes a control unit that executes a practice mode for practicing at least one of an autonomous driving function or a driving assistance function of a vehicle, and that outputs, from an output device, output content according to whether or not an input operation of a user, to a specific operation related to execution of the autonomous driving function or the driving assistance function instructed in the practice mode, is correct.

In the information processing device of the first aspect, the control unit executes the practice mode for practicing the at least one of the autonomous driving function or driving assistance function of a vehicle. The control unit then outputs, from the output device, the output content according to whether or not the input operation of the user, to the specific operation related to execution of the autonomous driving function or the driving assistance function instructed in the practice mode, is correct. This information processing device is accordingly able to raise the level of interest of the user in practicing compared to cases in which standard responses are employed for operations of the user when the user is practicing the at least one of the autonomous driving function or the driving assistance function of the vehicle. Specifically, when correct input operation has been performed by the user to a specific operation, this information processing device outputs output content for when correct input operation has been performed from the output device. Moreover, when incorrect input operation has been performed by the user to the specific operation, this information processing device outputs output content for when incorrect input operation has been performed from the output device. In this manner the user can ascertain whether their own input operation was correct or not through the output from the output device of the content output according to whether the input operation was correct or not, enabling the interest of the user in practicing to be raised.

An information processing device of a second aspect is the first aspect wherein the control unit further outputs from the output device progress information indicating how much progress has been made in practice by the user in the practice mode being executed.

In the information processing device of the second aspect, the control unit outputs from the output device the progress information indicating how much progress has been made in practice by the user in the practice mode being executed. The information processing device thereby enables the progress information to be utilized as an index when the user estimates the practice completion time. The information processing device is thereby able to lower a psychological hurdle to the execution of the practice mode by enabling the practice completion time to be estimated by the user.

An information processing device of a third aspect is the first aspect or the second aspect, wherein the control unit further displays question information indicating a question related to the specific operation in the practice mode on a display device serving as the output device, and ends or continues the practice mode according to whether or not an answer of the user to a question represented by the question information is correct.

In the information processing device of the third aspect, the control unit displays the question information indicating a question related to the specific operation in the practice mode on the display device serving as the output device, and ends or continues the practice mode according to whether the answer of the user to the question represented by the question information is correct or not. Thus, by displaying the question information of the practice mode on the display device, the information processing device is able to generate a feeling of tension of the user toward the practice mode, and is able to raise the understanding of the user for the specific operation. Moreover, the information processing device is also able to progress the practice mode to match the degree of understanding of the user to the specific operation by branching to either end or continue the practice mode according to whether or not the answer of the user to the question represented by the question information was correct.

An information processing device of a fourth aspect is any one of the first aspect to the third aspect, wherein the control unit further displays progress information indicating how much progress has been made in practice by the user in the autonomous driving function and the driving assistance function executable in the practice mode as a summary on a display device serving as the output device.

In the information processing device of the fourth aspect, the control unit displays the progress information indicating how much progress has been made in the practice by the user in the autonomous driving function and the driving assistance function executable in the practice mode as the summary on the display device serving as the output device. The information processing device thereby enables the user to ascertain how much progress has been made in practice of each of the practice modes.

An information processing device of a fifth aspect is any one of the first aspect to the fourth aspect, wherein the control unit further, for each of plural selection icons for selecting the autonomous driving function or the driving assistance function to be executed in the practice mode displayed on a display device serving as the output device, displays progress information indicating how much progress has been made in practice by the user in the autonomous driving function or the driving assistance function corresponding to each of the selection icons.

In the information processing device of the fifth aspect, the control unit displays the progress information indicating how much progress has been made in practice by the user in the autonomous driving function or the driving assistance function corresponding to each of the selection icons for each of the plural selection icons for selecting the autonomous driving function or the driving assistance function to be executed in the practice mode as displayed on a display device serving as the output device. The information processing device thereby enables the user to ascertain how much progress has been made in practice of each of the practice modes from starting the practice modes, thereby assisting selection of the practice mode by the user.

An information processing device of a sixth aspect is any one of the first aspect to the fifth aspect, wherein the control unit displays explanatory information indicating an explanation related to the autonomous driving function or the driving assistance function being executed in the practice mode on a first display device serving as the output device, and displays, on a second display device serving as the output device and different from the first display device, a particular image illustrating the vehicle and surrounding conditions of the vehicle according to the explanatory information from a viewpoint of looking at the vehicle traveling from a virtual viewpoint.

In the information processing device of the sixth aspect, the control unit displays the explanatory information indicating the explanation related to the autonomous driving function or the driving assistance function being executed in the practice mode on the first display device serving as the output device. The control unit also displays, on the second display device serving as the output device and different from the first display device, the particular image illustrating the vehicle and surrounding conditions of the vehicle according to the explanatory information from the viewpoint of looking at the vehicle traveling from the virtual viewpoint. The information processing device accordingly enables the user to be provided with information related to the practice mode using two display devices.

The information processing device of the seventh aspect is the sixth aspect, wherein the control unit further changes the particular image for display on the second display device according to a change in the explanatory information for display on the first display device.

In the information processing device of the seventh aspect, the control unit changes the particular image for display on the second display device according to a change in the explanatory information for display on the first display device. The information processing device thereby enables an integrated feeling to be imparted to the display content of the two display devices, and enables the level of interest of the user in practice to be raised.

An information processing method of the eighth aspect is processing executed by a computer. The information processing includes executing a practice mode for practicing at least one of an autonomous driving function or a driving assistance function of a vehicle, and outputting, from an output device, output content according to whether or not an input operation of a user, to a specific operation related to execution of the autonomous driving function or the driving assistance function instructed in the practice mode, is correct.

An information processing program of a ninth aspect causes processing executed by a computer. The information processing includes executing a practice mode for practicing at least one of an autonomous driving function or a driving assistance function of a vehicle, and outputting, from an output device, output content according to whether or not an input operation of a user, to a specific operation related to execution of the autonomous driving function or the driving assistance function instructed in the practice mode, is correct.

As described above, the information processing device, the information processing method, and the information processing program according to the present disclosure enable the level of interest of a user in practicing to be raised when a user is practicing at least one of an autonomous driving function or a driving assistance function of a vehicle compared to cases in which standard responses are given to operations of the user.

### BRIEF DESCRIPTION OF THE DRAWINGS

Exemplary embodiments of the present disclosure will be described in detail based on the following figures, wherein:
Fig. 1 is a block diagram illustrating a schematic configuration of a vehicle;
Fig. 2 is a diagram illustrating an interior of a vehicle, as viewed from a driver seat;
Fig. 3 is an explanatory diagram to explain an operation switch group;
Fig. 4 is a block diagram illustrating a schematic configuration of a control ECU;
Fig. 5 is a block diagram illustrating an example of a functional configuration of a control ECU;
Fig. 6 is an example of a first display as displayed on a multimedia display;
Fig. 7 is an example of a second display as displayed on a multimedia display;
Fig. 8 is an example of a third display as displayed on a multimedia display;
Fig. 9 is an example of a fourth display as displayed on a multimedia display;
Fig. 10 is an example of a fifth display as displayed on a multimedia display;
Fig. 11A is an example of a sixth display as displayed on a multimedia display;
Fig. 11B is an example of a seventh display as displayed on a multimedia display;
Fig. 12 is an example of an eighth display as displayed on a multimedia display;
Fig. 13 is a flowchart illustrating a flow of particular processing;
Fig. 14 is an example of a ninth display as displayed on a multimedia display;
Fig. 15 is an example of a first display as displayed on a meter display;
Fig. 16 is an example of a tenth display as displayed on a multimedia display;
Fig. 17 is an example of a second display as displayed on a meter display;
Fig. 18 is an example of a third display as displayed on a meter display;
Fig. 19 is an example of a fourth display as displayed on a meter display;
Fig. 20 is an example of an eleventh display as displayed on a multimedia display;
Fig. 21 is an example of a fifth display as displayed on a meter display;
Fig. 22 is an example of a twelfth display as displayed on a multimedia display;
Fig. 23 is an example of a sixth display as displayed on a meter display;
Fig. 24 is an example of a seventh display as displayed on a meter display;
Fig. 25 illustrating an example of a thirteenth display as displayed on a multimedia display;
Fig. 26 is an explanatory diagram illustrating another example of a particular image;
Fig. 27A is a first explanatory diagram illustrating an example of audio output content according to correct/incorrect input operation of a driver to a specific operation;
Fig. 27B is a second explanatory diagram illustrating an example of audio output content according to correct/incorrect input operation of a driver to a specific operation;
Fig. 27C is a third explanatory diagram illustrating an example of audio output content according to correct/incorrect input operation of a driver to a specific operation;
Fig. 27D is a fourth explanatory diagram illustrating an example of audio output content according to correct/incorrect input operation of a driver to a specific operation;
Fig. 28 is an explanatory diagram illustrating an example of combinations of output content according to correct/incorrect input operation of a driver to a specific operation;
Fig. 29A is an example of a fourteenth display as displayed on a multimedia display; and
Fig. 29B is an example of a fifteenth display as displayed on a multimedia display.

### DETAILED DESCRIPTION

Description follows regarding a vehicle 10 according to exemplary embodiments.

### First Exemplary Embodiment

First, description follows regarding a first exemplary embodiment of the vehicle 10 according to the present exemplary embodiment.

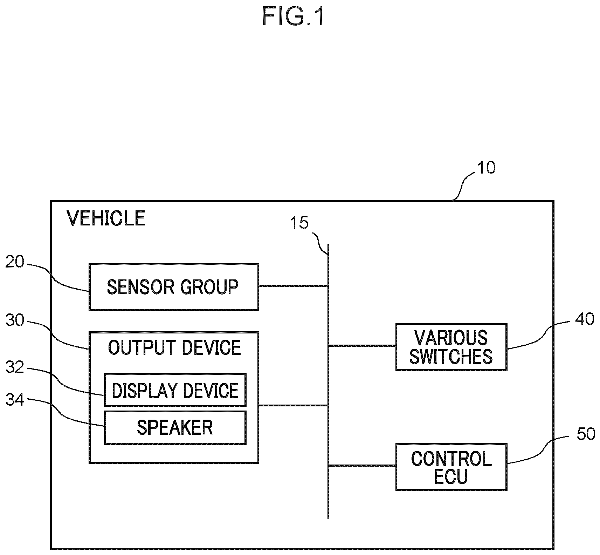

Fig. 1 is a block diagram illustrating a schematic configuration of the vehicle 10. As illustrated in Fig. 1, the vehicle 10 includes a sensor group 20, an output device 30, various switches 40, and a control electronic control unit (ECU) 50. The sensor group 20, the output device 30, the various switches 40, and the control ECU 50 are each connected together through an external bus (communication bus) 15. The control ECU 50 illustrates an example of an "information processing device".

The sensor group 20 includes sensors for detecting a state of the vehicle 10 and surrounding conditions thereto such as, for example, a 3D-LiDAR, a microwave sensor, an infrared sensor, a turn indicator sensor, an acceleration position sensor, a vehicle speed sensor, a steering angle sensor, an angular velocity sensor, a global positioning system (GPS) sensor, a gyrosensor, and an accelerometer. The sensor group 20 outputs detection results from each of the sensors to the control ECU 50.

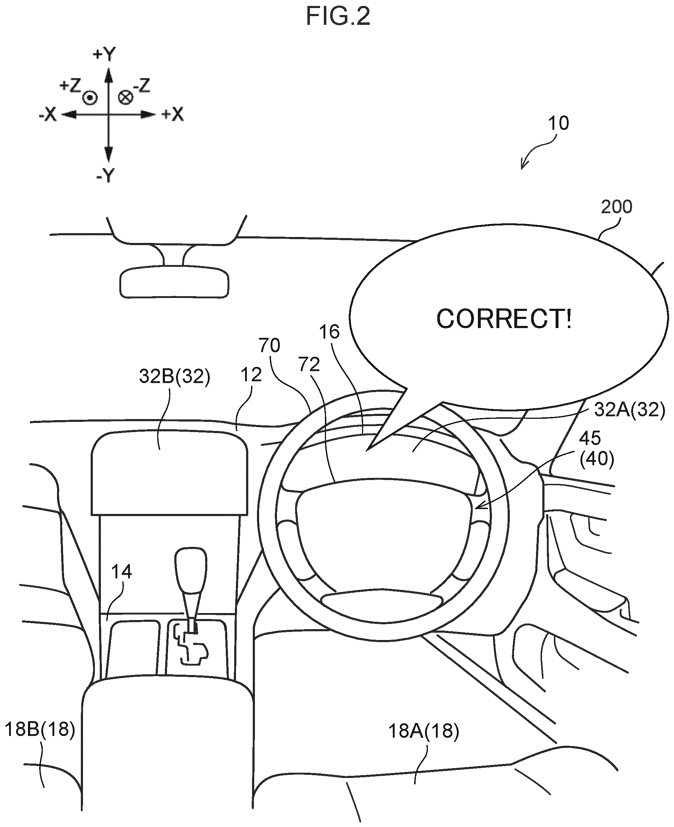

The output device 30 includes a display device 32 and a speaker 34. The display device 32 is provided to an instrument panel 12 (see Fig. 2), to a center console 14 (see Fig. 2), to a meter panel 16 (see Fig. 2), or the like, and displays proposals of operations related to the functions of the vehicle 10, explanatory images related to such functions, and the like.

The speaker 34 is provided to the instrument panel 12, the center console 14, the meter panel 16, or the like, and outputs audio related to the proposals of operations related to the functions of the vehicle 10, the explanatory images related to such functions, and the like.

The various switches 40 are onboard switches such as for operating or stopping the functions of the vehicle 10. Specific examples of the various switches 40 are described later.

The control ECU 50 is an advance driver assistance system (ADAS)-ECU that controls autonomous driving functions and driving assistance functions of the vehicle 10. As an example thereof, the autonomous driving functions include self-driving functions at autonomous driving level 3 or greater from out of the 6 levels of autonomous driving as defined by the Society of Automotive Engineers (SAE). Moreover, the driving assistance functions also include various driving assistance functions such as adaptive cruise control (ACC) and lane tracing assist (LTA). Note that although only the control ECU 50 is illustrated in Fig. 1, plural other ECUs are provided to the vehicle 10 according to the various functions of the vehicle 10.

Moreover, as described below, in autonomous driving, the control ECU 50 performs some or all of driving operations such as acceleration, braking, and steering without relying on input from the driver of the vehicle 10. Namely, the autonomous driving includes both fully autonomous driving in which all driving operations are performed by the control ECU 50, and driving assistance in which some driving operations are performed by the control ECU 50. The driver of the vehicle 10 is an example of a "user".

Fig. 2 is a diagram illustrating an interior of a vehicle 10, as viewed from a driver seat. In Fig. 2, a vehicle width direction of the vehicle 10 is indicated by X, a vehicle height direction is indicated by Y, and a vehicle front-rear direction is illustrated by Z. Moreover, in Fig. 2 the right side in the vehicle width direction is indicated by +X and the left side by -X, upward in the vehicle height direction is indicated by +Y and downward by -Y, and forward in the vehicle front-rear direction is indicated by +Z and rearward by -Z.

As illustrated in Fig. 2, the vehicle 10 is, as an example, a right-hand drive vehicle. This means that a vehicle seat 18 on the right side in the drawing is a driver seat 18A, and a vehicle seat 18 on the left side in the drawing is a front passenger seat 18B.

A steering wheel 70 is disposed in front of the driver seat 18A. The steering wheel 70 is supported by a non-illustrated steering column that supports a wheel pad 72, and is disposed rearward of the instrument panel 12. An operation switch group 45 configured by a collection of plural onboard switches is provided as the various switches 40 at a right side of the wheel pad 72.

The meter panel 16 is disposed in front of the steering wheel 70. A meter display 32A that is a liquid crystal display is provided to the meter panel 16 as the display device 32.

The center console 14 is disposed between the driver seat 18A and the front passenger seat 18B. A multimedia display 32B that is a liquid crystal display is provided above the center console 14 as the display device 32.

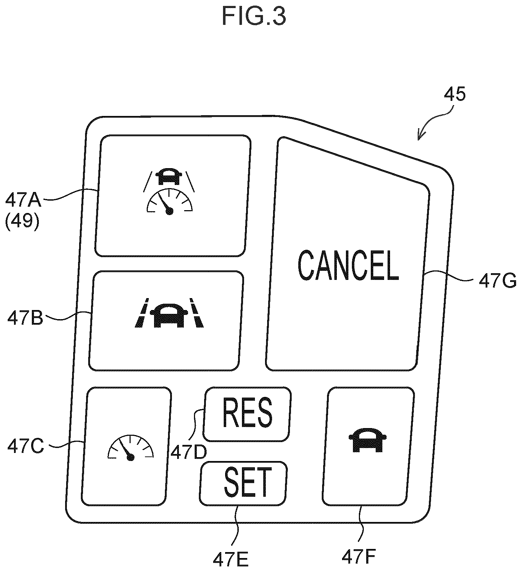

Fig. 3 is an explanatory diagram to explain the operation switch group 45. As illustrated in Fig. 3, the operation switch group 45 is a collection of plural onboard switches including an operation switch 47A disposed at the top left in the drawing, an operation switch 47B disposed below the operation switch 47A, an operation switch 47C disposed below the operation switch 47B, an operation switch 47D disposed at the right of the operation switch 47C, an operation switch 47E disposed below the operation switch 47D, an operation switch 47F disposed at the right of the operation switch 47E, and an operation switch 47G disposed above the operation switch 47F.

In the following the operation switch 47A is sometimes referred to as a "cruise control switch 49". The cruise control switch 49 is an onboard switch that enables ACC to be switched ON and OFF from out of the driving assistance functions of the vehicle 10. Note that although explanation is omitted for the operation switches 47B to 47G in the operation switch group 45 other than the operation switch 47A (the cruise control switch 49), the operation switches 47B to 47G are each also switches to cause operating, stopping, or the like of functions of the vehicle 10 by operation of the driver.

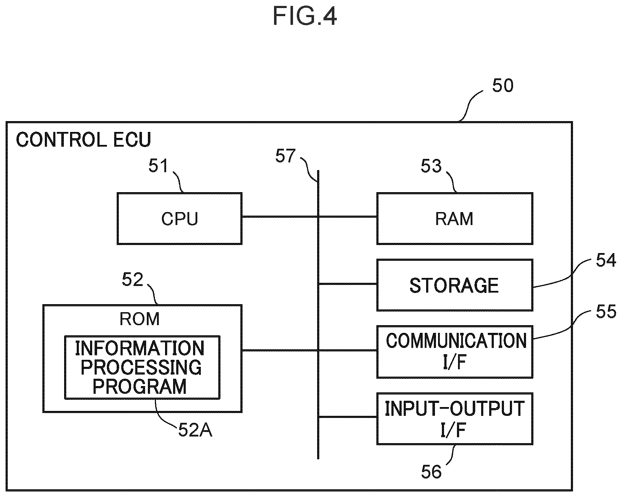

Fig. 4 is a block diagram illustrating a schematic configuration of the control ECU 50. As illustrated in Fig. 4, the control ECU 50 is configured including a central processing unit (CPU) 51, read only memory (ROM) 52, random access memory (RAM) 53, storage 54, a communication interface (I/F) 55, and an input-output I/F 56. The CPU 51, the ROM 52, the RAM 53, the storage 54, the communication I/F 55, and the input-output I/F 56 are connected together through an internal bus 57 to be capable of communicating with each other.

The CPU 51 is a central processing unit that executes various programs and controls each section. Namely, the CPU 51 serving as a processor reads a program from the ROM 52 serving as memory, and executes the program using the RAM 53 as a work area. In the present exemplary embodiment, an information processing program 52A is stored on the ROM 52.

The ROM 52 stores various programs and various data. The RAM 53 serves as a work area for temporarily storing programs and/or data.

The storage 54 is NAND memory configured by an embedded MultiMediaCard (eMMC), Universal Flash Storage (UFS), or the like. The storage 54 and the CPU 51 are connected by the eMMC or UFS interface.

Moreover, each of the components provided in the control ECU 50, such as the ROM 52, the storage 54, and the like, are preferably a medium having tamper resistance, such as a hardware security module (HSM).

The communication I/F 55 is an interface for connecting to other ECUs. This interface employs a communication standard under Ethernet (registered trademark).

The input-output I/F 56 is an interface to communicate with onboard devices installed to the vehicle 10, such as the sensor group 20, the output device 30, and the various switches 40.

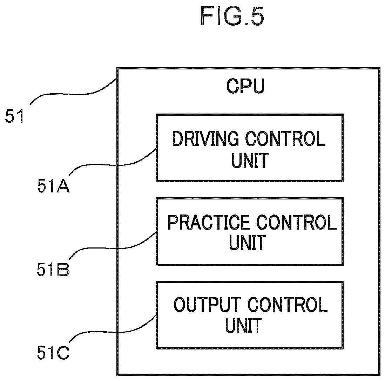

Next, description follows regarding a functional configuration of the control ECU 50. Fig. 5 is a block diagram illustrating an example of a functional configuration of the control ECU 50.

As illustrated in Fig. 5, the CPU 51 of the control ECU 50 includes, as functional configuration, a driving control unit 51A, a practice control unit 51B, and an output control unit 51C. Each of the functional configuration is realized by the CPU 51 reading out and executing the information processing program 52A stored on the ROM 52. The practice control unit 51B and the output control unit 51C are examples of a "control unit".

The driving control unit 51A executes an autonomous driving function or a driving assistance function as instructed by the driver, and controls autonomous driving of the vehicle 10. For example, the driving control unit 51A executes ACC when the cruise control switch 49 has been operated during travel of the vehicle 10.

The practice control unit 51B executes a practice mode for practicing the autonomous driving function and the driving assistance function of the vehicle 10, and controls travel in the practice mode. The practice control unit 51B starts the practice mode when an instruction to start practice mode has been received while the vehicle 10 is stationary. When one of the various switches 40 related to execution of the autonomous driving function or the driving assistance function has been operated during execution of the practice mode, the practice control unit 51B prohibits execution of the autonomous driving function or the driving assistance function corresponding to that respective switch of the various switches 40. This means that, for example, ACC is not executed even though the operation of the cruise control switch 49 is instructed in the practice mode and the driver operates the cruise control switch 49 in accordance with this instruction.

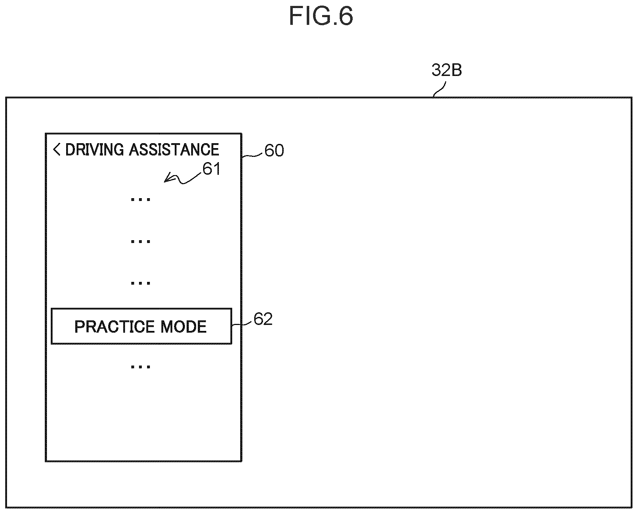

The output control unit 51C controls the output device 30, and causes various output content to be output from the output device 30. For example, the output control unit 51C causes output content to be output from the output device 30 according to whether an input operation of the driver is correct or not in response to a specific operation concerning execution of an autonomous driving function or a driving assistance function instructed in practice mode. Description follows regarding output content concerning the practice mode in the first exemplary embodiment, with reference to Fig. 6 to Fig. 12. Note that the vehicle 10 is assumed to be stationary when output content concerning the practice mode is output.

Fig. 6 illustrates an example of a first display displayed on the multimedia display 32B that is the output device 30. As an example, Fig. 6 illustrates a home screen displayed on the multimedia display 32B after a specific system of the vehicle 10 has been started up to execute the practice mode.

A selection section 60 for selecting contents to be displayed on the multimedia display 32B is displayed on the home screen illustrated in Fig. 6. Text information 61 is displayed on the selection section 60, with various contents represented by text. In Fig. 6, a cursor 62 is displayed over text of "practice mode" displayed on the text information 61. The CPU 51 of the control ECU 50 receives an instruction to start practice mode when a specific switch of the various switches 40 has been operated in this state, and starts the practice mode.

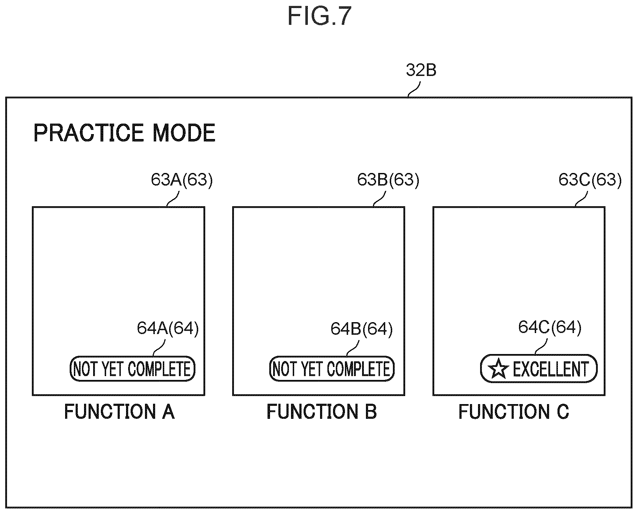

Fig. 7 illustrates an example of a second display as displayed on the multimedia display 32B. Specifically, Fig. 7 illustrates a state after the CPU 51 has received an instruction to start practice mode on the home screen illustrated in Fig. 6. Fig. 7 is a selection screen to select an autonomous driving function or a driving assistance function to be executed in practice mode.

Plural selection icons 63 are displayed on the selection screen illustrated in Fig. 7. Specifically, the selection icons 63 illustrated in Fig. 7 include, in practice mode, a selection icon 63A to practice a function A, a selection icon 63B to practice a function B, and a selection icon 63C to practice a function C.

Moreover, for each of the plural selection icons 63, progress information 64 is displayed to indicate how much progress has been made by the driver in practice with the autonomous driving function or the driving assistance function corresponding to the respective selection icon 63. Specifically, the progress information 64 illustrated in Fig. 7 includes progress information 64A indicating how much progress has been made with practice of function A, progress information 64B indicating how much progress has been made with practice of function B, and progress information 64C indicating how much progress has been made with practice of function C. The progress information 64 is an example of "progress information".

The progress information 64A and the progress information 64B are displayed as "not yet complete" to indicate that practice of function A and function B is not yet finished. Moreover, the progress information 64C is displayed with a star mark and the text "Excellent" to indicate that practice of the function C is finished.

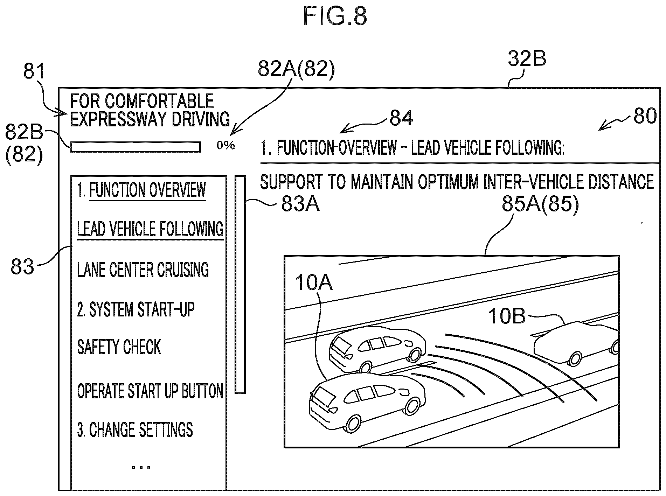

Fig. 8 is an example of a third display as displayed on the multimedia display 32B. Specifically, Fig. 8 illustrates a state after the selection icon 63A has been selected on the selection screen illustrated in Fig. 7. Explanation follows regarding an example of a case in which the selection icon 63A has been selected for practicing ACC in practice mode as function A.

Explanatory information 80 indicating an explanation concerning the autonomous driving function or the driving assistance function during practice mode execution, in this case ACC, is displayed on the multimedia display 32B illustrated in Fig. 8. Specifically, the explanatory information 80 illustrated in Fig. 8 is configured including text information 81, progress information 82, and content table information 83 displayed about 1/4 of the way across from the left in the display area of the multimedia display 32B, and text information 84 and image information 85 displayed in the remaining 3/4 of the display area.

The text information 81 indicates a catch phrase for the ACC that is being executed in practice mode. In Fig. 8, the catch phrase "For Comfortable Expressway Driving" is displayed as the text information 81.

The progress information 82 illustrates how much progress has been made with practice by the driver in the practice mode being executed. The progress information 82 is configured including numerical information 82A that indicates how much progress has been made with practice as a progress percent, and graphic information 82B that graphically illustrates the progress percent represented in the numerical information 82A. The graphic information 82B illustrates the progress percent by a black region. In the progress information 82 illustrated in Fig. 8, the progress percent represented by the numerical information 82A is "0%", and the graphic represented by the graphic information 82B is "no black region". In this manner, Fig. 8 illustrates a state in which absolutely no progress has been made with practice by the driver in practice mode. The progress information 82 is an example of "progress information".

The content table information 83 indicates a table of contents for practicing ACC during practice mode execution. As an example, the content table information 83 illustrated in Fig. 8 illustrates a first half of practice topics, this being "1. Function Overview", "2. System Start-Up", and "3. Change Settings". Moreover, an underlined portion in the content table information 83, this being "1. Function Overview: Lead Vehicle Following" in Fig. 8, is the practice topic being executed. Note that the driver is able to change the practice topics illustrated in the content table information 83 by moving a scrollbar 83A disposed at the right of the content table information 83 up or down.

The text information 84 indicates an explanation regarding the practice topic being executed. In Fig. 8, a description "1. Function Overview - Lead Vehicle Following: Support to maintain optimum inter-vehicle distance" is displayed as the text information 84.

The image information 85 illustrates an image for the practice topic being executed. The image information 85 illustrated in Fig. 8 is "image information 85A". This image information 85A illustrates a situation in which an ego vehicle image 10A indicating the vehicle 10 is cruising to follow a lead vehicle image 10B indicating a lead vehicle.

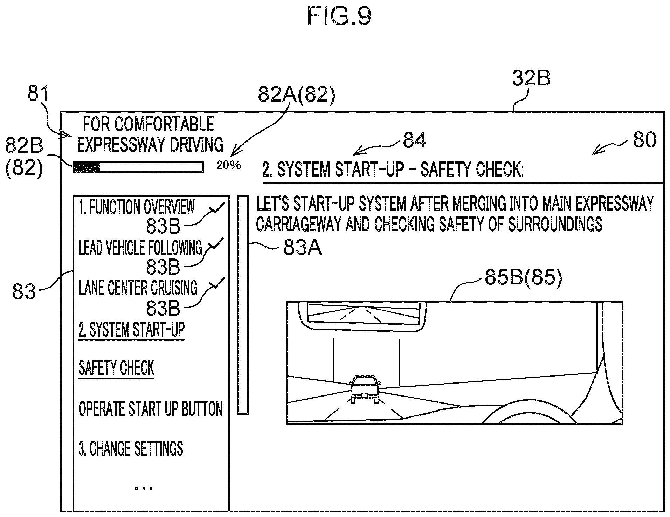

Fig. 9 illustrates an example of a fourth display as displayed on the multimedia display 32B. Specifically, Fig. 9 illustrates a state in which practice of the driver in practice mode has progressed from the screen illustrated in Fig. 8.

The progress information 82 illustrated in Fig. 9 is for a progress percent indicated by the numerical information 82A of "20%", and for a graphic indication of the graphic information 82B of "a black region up to about 115 from the left". Fig. 9 accordingly indicates that the practice of the driver in practice mode has progressed by about 1/5^{th}.

In Fig. 9, a complete mark 83B, which is a check mark to indicate that practice of some of the practice topics indicated have been completed, is displayed on the right side of the content table information 83. Specifically, three of the complete marks 83B are displayed in the content table information 83 illustrated in Fig. 9, indicating that practice of the practice topic "1. Function Overview" has been completed.

In Fig. 9, a description "2. System Start-Up - Safety Check: Let's start-up system after merging into main expressway carriageway and checking safety of surroundings" is displayed as the text information 84, with this corresponding to "2. System Start-Up - Safety Check" that is the practice topic being executed.

The image information 85 illustrated in Fig. 9 is "image information 85B". This image information 85B illustrates a scene in front as it would be when viewed by the driver through the front windshield when actually executing ACC during travel of the vehicle 10. By displaying the image information 85B, a state close to an actual environment can be presented as an image to the driver even in practice mode performed while the vehicle 10 is stationary.

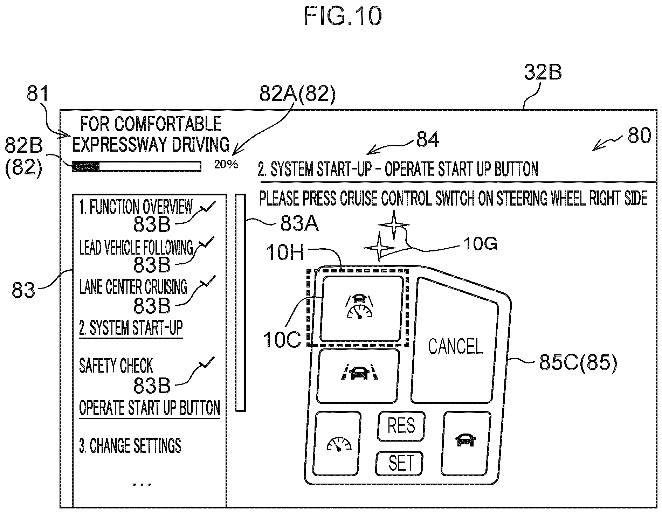

Fig. 10 is an example of a fifth display as displayed on a multimedia display 32B. Specifically, Fig. 10 illustrates a state after practice of the driver has progressed in practice mode from the screen illustrated in Fig. 9.

Four of the complete marks 83B are displayed in the content table information 83 illustrated in Fig. 10, indicating that the practice of practice topic "2. System Start-Up - Safety Check" has also been completed in addition to the practice topics for which practice had been completed in Fig. 9.

In Fig. 10, a description of "2. System Start-Up - Start-Up Button Operation: Please press cruise control switch on steering wheel right side" is displayed as the text information 84, with this corresponding to "2. System Start-Up: Safety Check - Start-Up Button Operation" that is the practice topic being executed.

The image information 85 illustrated in Fig. 10 is "image information 85C". The image information 85C indicates an image corresponding to the operation switch group 45 of the vehicle 10 (see Fig. 3). Moreover, in the image information 85C, the driver is instructed to operate the cruise control switch 49 by emphasizing the surroundings of a switch image 10C indicating the cruise control switch 49 by surrounding it with a broken line. By displaying the image information 85C, the driver can be prompted to operate the cruise control switch 49 in practice mode without looking down, similarly to in an actual environment.

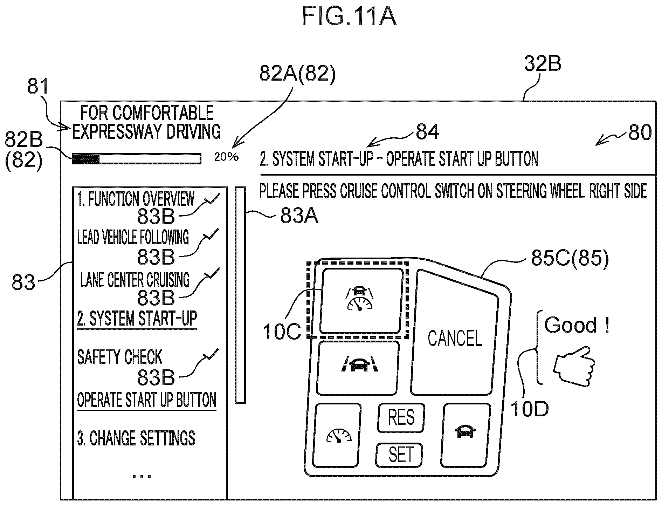

Fig. 11A illustrates an example of a sixth display as displayed on the multimedia display 32B. Fig. 11A illustrates a state after a specific operation has been instructed on the screen illustrated in Fig. 10, specifically a state after a correct operation has been performed by the driver in response to operation of the cruise control switch 49.

In Fig. 11A, response information 10D indicating a response to correct operation by the driver is displayed at the right side of the image information 85C. As an example, the response information 10D is configured by text "Good!" and an image indicating a "thumbs up sign".

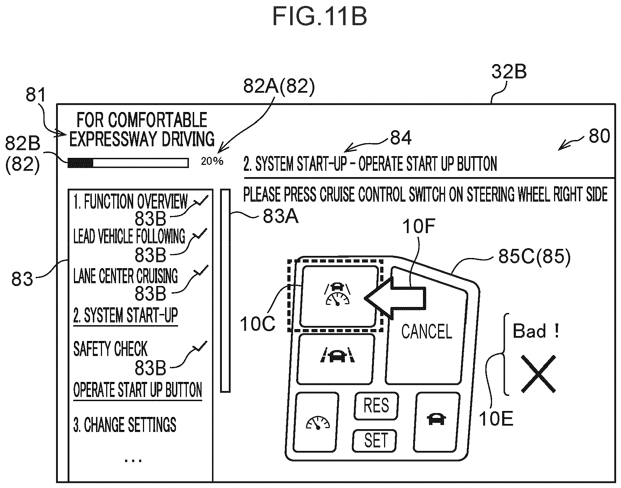

Fig. 11B is an example of a seventh display as displayed on the multimedia display 32B. Fig. 11B illustrates a state after a mistaken operation has been performed by the driver in response to an operation of the cruise control switch 49 instructed on the screen illustrated in Fig. 10.

In Fig. 11B, response information 10E indicating a response to the mistaken operation by the driver is displayed on the right side of the image information 85C. As an example, the response information 10E is configured by text "Bad!" and an image indicating a "cross mark". Moreover, in the image information 85C illustrated in Fig. 11B, an arrow image 10F pointing to the switch image 10C is displayed to indicate that operation of the cruise control switch 49 is the correct operation.

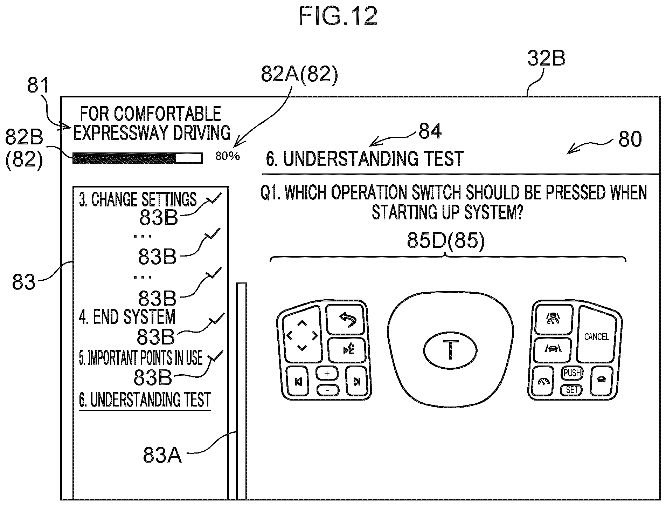

Fig. 12 is an example of an eighth display as displayed on the multimedia display 32B. Specifically, Fig. 12 illustrates a state after the driver has made progress in practice in the practice mode from the screen illustrated in Fig. 11A.

The progress information 82 illustrated in Fig. 12 is one in which the progress percent illustrated by the numerical information 82A is "80%", and the graphic illustrated by the graphic information 82B is a "black region up to about 4/5 from the left". Fig. 12 indicates that practice of the driver in the practice mode has progressed to a level of about 4/5.

The content table information 83 illustrated in Fig. 12 illustrates the second half of practice topics, these being "3. Change Settings","4. End System", "5. Take Care in Use", and "6. Understanding Test". Moreover, in the content table information 83 illustrated in Fig. 12, there are five of the complete marks 83B displayed, indicating that practice of the practice topics has been completed up to "5. Important points in use".

In Fig. 12, a description of "6. Understanding Test: Q1 Which operation switch should be pressed when starting up the system?", is displayed as the text information 84, with this corresponding to "6. Understanding Test" that is the practice topic being executed.

The image information 85 illustrated in Fig. 12 is "image information 85D". The image information 85D is an image indicating the plural various switches 40 included in the operation switch group 45. As an example, in Fig. 12 question information indicating questions related to a specific operation in the practice mode are configured by the text information 84 and the image information 85D. The multimedia display 32B in Fig. 12 is an example of a "display device".

Based on the operation content of the various switches 40 during execution of understanding test, the CPU 51 of the control ECU 50 decides whether the question being tested has been answered correctly or not. In the example illustrated in Fig. 12, the CPU 51 determines that "understanding test Q1" was answered correctly when the cruise control switch 49 has been operated, and determines that the "understanding test Q1" was not answered correctly when one of the various switches 40 other than the cruise control switch 49 was operated. The CPU 51 ends the practice mode when determined that all of the understanding test has been answered correctly. On the other hand, the CPU 51 continues practice mode when determined that part of the understanding test had not been answered correctly. In the understanding test, a predetermined plural number of questions are tested each time in practice mode. Moreover, the questions tested in the understanding test are configured by part of the practice or explained content of the practice topics up to the understanding test.

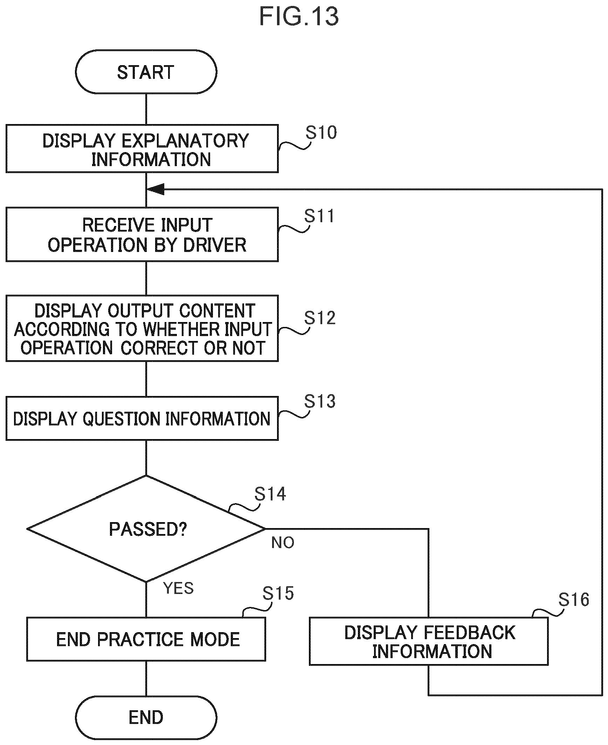

Fig. 13 is a flowchart illustrating a flow of particular processing executed by the control ECU 50 in practice mode. The particular processing is performed by the CPU 51 reading the information processing program 52A from the ROM 52 and expanding and executing the information processing program 52A in the RAM 53. As an example, the particular processing is executed based on the practice mode being started. Note that description follows regarding an example of a case in which ACC is practiced in the practice mode.

At step S10 illustrated in Fig. 13, the CPU 51 displays the explanatory information 80 indicating an explanation related to ACC on the multimedia display 32B. For example, the CPU 51 displays the explanatory information 80 such as illustrated in Fig. 8 and Fig. 9 on the multimedia display 32B. The CPU 51 then proceeds to step S11.

At step S11, the CPU 51 receives an input operation by the driver in response to a specific operation related to execution of ACC as instructed in practice mode. For example, the CPU 51 receives as the specific operation an input operation by the driver in response to the instruction to operate the cruise control switch 49 on the screen illustrated in Fig. 10. The CPU 51 then proceeds to step S12.

At step S12, the CPU 51 displays on the multimedia display 32B output content according to whether the input operation of the driver received at step S11 was correct or not. For example, when the correction operation was performed by the driver the CPU 51 displays, as the output content, the response information 10D as illustrated in Fig. 11A, and when a mistaken operation was performed by the driver the CPU 51 displays the response information 10E as indicated in Fig. 11B. The CPU 51 then proceeds to step S13.

At step S13, the CPU 51 displays question information indicating a question related to the above specific operation on the multimedia display 32B. For example, the CPU 51 employs, as the question information, the text information 84 and the image information 85D illustrated in Fig. 12, to display on the multimedia display 32B a question asking which of the various switches 40 should be operated when executing ACC. The CPU 51 then proceeds to step S14.

At step S14, the CPU 51 determines whether or not the understanding test has been passed. The CPU 51 then proceeds to step S15 in cases in which determination is that the understanding test has been passed (step S14: YES). On the other hand, the CPU 51 then proceeds to step S16 in cases in which determination is that the understanding test has not been passed (step S14: NO). As an example, the CPU 51 determines that the understanding test has been passed when determined that all of the understanding test has been answered correctly.

At step S15 the CPU 51 ends the practice mode. The CPU 51 then ends the particular processing.

At step S16, the CPU 51 displays feedback information indicating feedback regarding questions the driver answered incorrectly in the understanding test on the multimedia display 32B. This feedback information is, for example as illustrated in Fig. 11B, configured including an image indicating the switch of the various switches 40 that should have been operated (for example: switch image 10C), and an image pointing out this image (for example: arrow image 10F). The CPU 51 then returns to step S11.

As described above, the CPU 51 of the control ECU 50 executes the practice mode to practice the autonomous driving functions and the driving assistance functions of the vehicle 10. The CPU 51 then displays, on the multimedia display 32B, output content according to whether the input operation of the driver was correct or not in response to the specific operation related to execution of the autonomous driving function or the driving assistance function instructed in practice mode. The control ECU 50 is thereby able to raise the level of interest of the driver in practicing compared to cases in which standard responses are employed for operations of the driver when the driver is practicing at least one of the autonomous driving functions or the driving assistance functions. Specifically, when a correct input operation has been performed by the driver for the specific operation, the control ECU 50 displays, on the multimedia display 32B, the output content for cases in which correct input operation has been performed. Moreover, when an incorrect input operation has been performed by the driver for the specific operation, the control ECU 50 displays on the multimedia display 32B the output content for cases in which incorrect input operation has been performed. The driver is thereby able to recognize whether their own input operation was correct or not by displaying on the multimedia display 32B the output content according to whether the input operation was correct or not, thereby raising the level of interest in practicing.

Moreover, the CPU 51 of the control ECU 50 causes the progress information 82 indicating how much progress the driver has made with practice during practice mode execution to be displayed on the multimedia display 32B. The control ECU 50 thereby enables the progress information 82 to be utilized as an indicator when the driver is estimating a practice completion time. This means that the control ECU 50 is able to lower a psychological hurdle to the execution of the practice mode by enabling estimation of the practice completion time by the driver.

The CPU 51 of the control ECU 50 also displays the question information indicating questions related to a specific operation in practice mode on the multimedia display 32B, and either ends or continues practice mode according to whether the answer of the driver to the question represented by the question information was correct or not. The control ECU 50 is thereby able, by displaying the question information of the practice mode on the multimedia display 32B, to raise the degree of understanding of the driver to the specific operation while also enabling generation of a feeling of tension of the driver toward the practice mode. The control ECU 50 is also able to progress the practice mode to match the degree of understanding of the driver to the specific operation by branching to either end or continue the practice mode according to whether or not the answer of the driver to the question represented by the question information was correct.

The CPU 51 of the control ECU 50 also causes the progress information 64, indicating how much progress has been made by the driver in practice of the autonomous driving function or the driving assistance function corresponding to the selection icon 63, to be displayed for each of the plural selection icons 63 displayed on the multimedia display 32B. The control ECU 50 thereby enables the driver to ascertain how much progress has been made with practice in each practice mode prior to starting the practice mode, thereby enabling assisted selection of the practice mode by the driver.

### Second Exemplary Embodiment

Next description follows regarding a second exemplary embodiment of the vehicle 10 according to the present exemplary embodiment, with description of duplicate portions to the above exemplary embodiment either omitted or simplified.

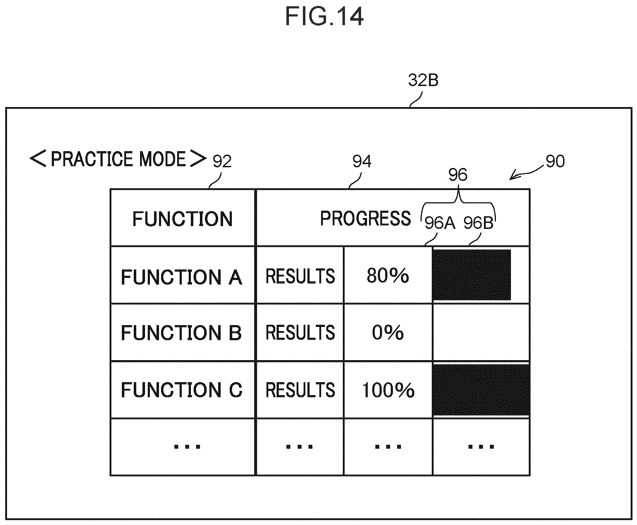

Fig. 14 is an example of a ninth display as displayed on the multimedia display 32B. Specifically, Fig. 14 is a summary screen showing a summary of how much progress has been made in practice by the driver for each of the autonomous driving functions and driving assistance functions executable in practice mode.

A summary table 90 indicating how much progress has been made in the practice of the driver is displayed in table format on the summary screen illustrated in Fig. 14. As an example, the summary table 90 is configured including a first column 92 indicating the autonomous driving functions or the driving assistance functions that are executable in practice mode, and a second column 94 indicating how much progress has been made in practice by the driver for each of the functions.

For example, functions such as a function A, a function B, and a function C, are displayed in the first column 92 illustrated in Fig. 14 as the autonomous driving functions or the driving assistance functions executable in practice mode.

Moreover, progress information 96, which includes numerical information 96A indicating how much progress has been made in practice by the driver as a progress percent, and graphic information 96B graphically indicating the progress percent indicated by the numerical information 96A, is displayed in the second column 94 illustrated in Fig. 14. The graphic information 96B illustrates the progress percent by a black region.

For example, in the summary table 90, the progress information 96 corresponding to the function A row is a progress percent represented in the numerical information 96A of "80%", and the graphic represented by the graphic information 96B is "a black region up to about 4/5 from the left". In this manner, Fig. 14 illustrates that the practice of the driver for the function A has progressed to about a 4/5 level. The progress information 96 is an example of "progress information".

As described above, the CPU 51 of the control ECU 50 functions as the output control unit 51C and displays, as a summary on the multimedia display 32B, the progress information 96 indicating how much progress has been made in practice by the driver in the autonomous driving functions and the driving assistance functions executable in practice mode. The control ECU 50 thereby enables the driver to ascertain how much progress has been made with practice in each of the practice modes.

### Third Exemplary Embodiment

Next, description follows regarding a third exemplary embodiment of the vehicle 10 according to the present exemplary embodiment, with description of duplicate portions to the above exemplary embodiments either omitted or simplified.

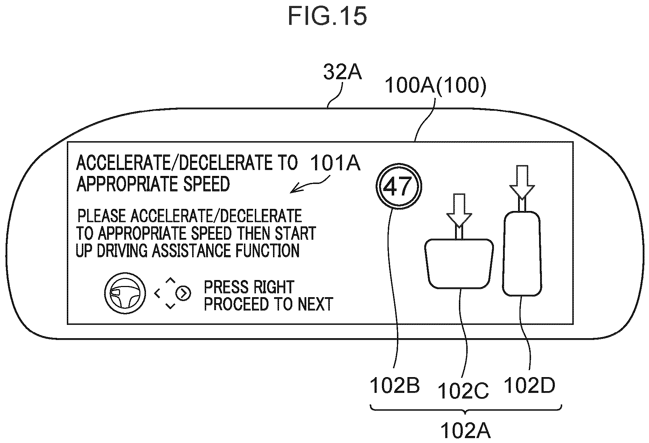

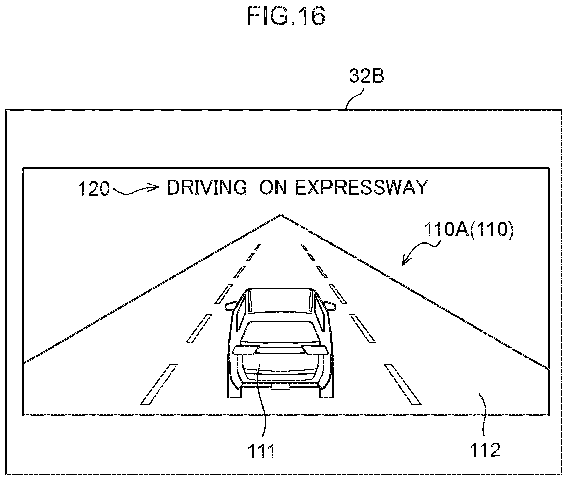

The third exemplary embodiment differs from the above exemplary embodiments in that the output content of the practice mode is displayed on two display devices 32, a meter display 32A and a multimedia display 32B. Specifically, the CPU 51 of the control ECU 50 functions as the output control unit 51C to cause explanatory information 100 representing an explanation related to ACC being executed in practice mode (see Fig. 15 and the like) to be displayed on the meter display 32A. Moreover, the CPU 51 also functions as the output control unit 51C to cause a particular image 110 illustrating the vehicle 10 and the surrounding conditions to the vehicle 10 according to the explanatory information 100 to be displayed on the multimedia display 32B (see Fig. 16 and the like) from a viewpoint of looking at the traveling vehicle 10 from a virtual viewpoint. The meter display 32A is an example of a "first display device", and the multimedia display 32B is an example of a "second display device".

Description follows regarding output content related to the practice mode of the third exemplary embodiment, with reference to Fig. 15 to Fig. 25. Note that the vehicle 10 is stationary when the output content related to the practice mode is output.

Fig. 15 is an example of a first display displayed on the meter display 32A. Specifically, Fig. 15 illustrates an example of a display of explanatory information 100A indicating a first explanation related to ACC as the explanatory information 100.

The explanatory information 100A illustrated in Fig. 15 is configured including notification information 101A, and image information 102A displayed on the right side of the notification information 101A.

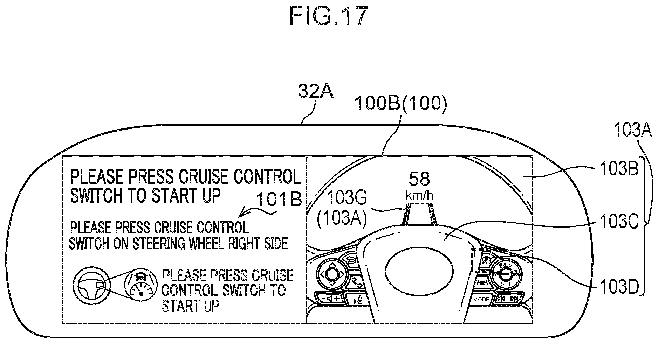

The notification information 101A indicates a notification to the driver. For example, the notification information 101A uses text and an image, and notifies the driver of a driving operation that the driver should perform in practice mode, and notifies the driver which switch of the various switches 40 should be operated to progress to the next explanatory information 100B (see Fig. 17).

The image information 102A illustrated in Fig. 15 illustrates an image corresponding to the notification information 101A. The image information 102A is configured including a vehicle speed image 102B illustrating a vehicle speed, a brake pedal image 102C illustrating a brake pedal, and an accelerator pedal image 102D illustrating an accelerator pedal. The current vehicle speed is indicated as being 47 km/h in the vehicle speed image 102B.

Fig. 16 is an example of a tenth display as displayed on the multimedia display 32B. Specifically, Fig. 16 illustrates an example of a display of a particular image 110A that is the particular image 110 corresponding to the explanatory information 100A illustrated in Fig. 15.

The particular image 110A illustrated in Fig. 16 is configured including an ego vehicle image 111 illustrating the vehicle 10, and a road image 112 illustrating a road on which the vehicle 10 is traveling.

The particular image 110 is an image generated from a viewpoint of looking at the traveling vehicle 10 from a virtual viewpoint. This virtual viewpoint is set in three-dimensional virtual space having the position of the ego vehicle image 111 as its origin, and is defined by viewpoint coordinates and viewpoint angle (orientation) in virtual space. As an example, this virtual viewpoint is a viewpoint viewed at a particular viewpoint angle from particular viewpoint coordinates at the rear side in a progression direction of an ego vehicle image 111 representing the traveling vehicle 10. The CPU 51 of the control ECU 50 functions as the output control unit 51C, generates a particular image 110 that assumes the surroundings of the traveling vehicle 10 are being viewed from the virtual viewpoint in virtual space, and displays the particular image 110 on the multimedia display 32B. Note that even when the vehicle 10 is traveling, the CPU 51 displays, on the multimedia display 32B, an image illustrating the vehicle 10 and the surrounding conditions to the vehicle 10 with a viewpoint looking from a virtual viewpoint similar to that of the particular image 110.

Moreover, text information 120 indicating an explanation regarding the particular image 110 is displayed at an upper portion of the particular image 110 on the multimedia display 32B. In Fig. 16 an explanation for the particular image 110A of "Driving on expressway" is displayed as the text information 120.

Fig. 17 is an example of a second display as displayed on the meter display 32A. Specifically, Fig. 17 illustrates an example of a display of the explanatory information 100B indicating a second explanation related to ACC as the explanatory information 100.

The explanatory information 100B illustrated in Fig. 17 is configured including notification information 101B, and image information 103A displayed at the right side of the notification information 101B.

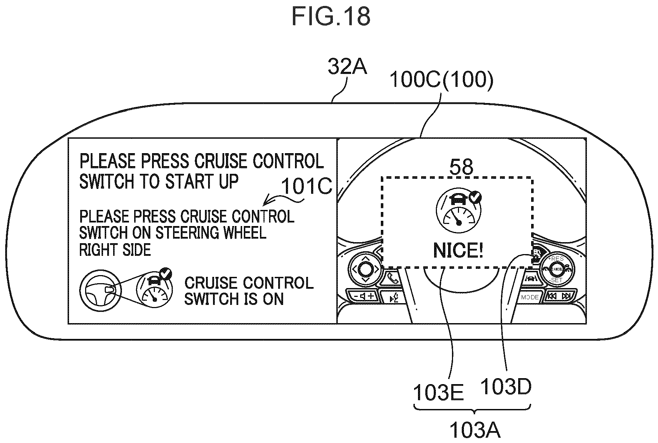

The notification information 101B indicates a notification for the driver. For example, the notification information 101B uses text and an image to notify the driver of the switch that should be operated of the various switches 40 to progress to the next explanatory information 100C (see Fig. 18).

The image information 103A illustrated in Fig. 17 illustrates an image corresponding to the notification information 101B. The image information 103A is configured including images such as a steering wheel image 103B illustrating the steering wheel 70, a wheel pad image 103C illustrating a wheel pad 72, a switch image 103D illustrating the cruise control switch 49, and a road image 103G illustrating the road on which the vehicle 10 is traveling. The image information 103A instructs the driver to operate the cruise control switch 49 by emphasizing the surroundings of the switch image 103D by surrounding with a broken line.

Fig. 18 is an example of a third display as displayed on the meter display 32A. Specifically, Fig. 18 illustrates an example of a display of the explanatory information 100C indicating a third explanation related to ACC as the explanatory information 100.

The explanatory information 100C illustrated in Fig. 18 is configured including a notification information 101C, and an image information 103A displayed at the right side of the notification information 101C.

The notification information 101C indicates a notification to the driver. For example, the notification information 101C uses text and an image, and notifies the driver that the correct operation has been performed on the various switches 40.

The image information 103A illustrated in Fig. 18 has display content in which the switch image 103D is changed from the image information 103A illustrated in Fig. 17. Specifically, the switch image 103D illustrated in Fig. 18 has a color changed from the white of the switch image 103D illustrated in Fig. 17 to black, and indicates that the cruise control switch 49 has been operated.

Moreover, the image information 103A illustrated in Fig. 18 has a response image 103E indicating a response to correct operation by the driver added to the image information 103A illustrated in Fig. 17. As an example, the response image 103E is configured including an image illustrating "a design of the cruise control switch 49" and text of "Nice!".

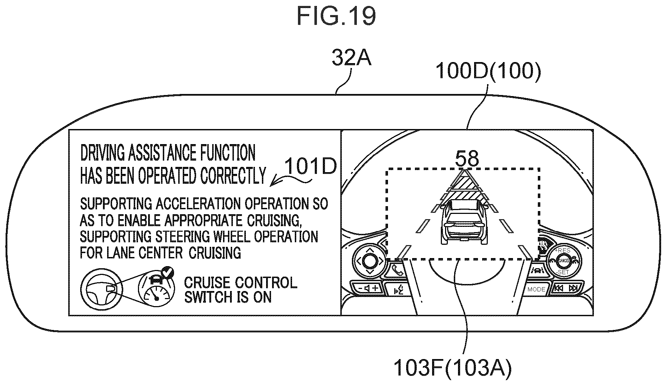

Fig. 19 is an example of a fourth display as displayed on the meter display 32A. Specifically, Fig. 19 illustrates an example of display of explanatory information 100D indicating a fourth explanation related to ACC as the explanatory information 100.

The explanatory information 100D illustrated in Fig. 19 is configured including notification information 101D, and image information 103A displayed at the right side of the notification information 101D.

The notification information 101D indicates a notification to the driver. For example, the notification information 101D uses text and an image, and notifies the driver that ACC has operated correctly in practice mode.

The image information 103A illustrated in Fig. 19 is changed from the image information 103A illustrated in Fig. 18 in that a surroundings image 103F assuming the surroundings of the traveling vehicle 10 are being looked at from a virtual viewpoint is displayed instead of the response image 103E. The surroundings image 103F is a representation of an image illustrating the vehicle 10 and surrounding conditions of the vehicle 10 with a viewpoint looking from a virtual viewpoint similar to the particular image 110 illustrated in Fig. 16 etc.

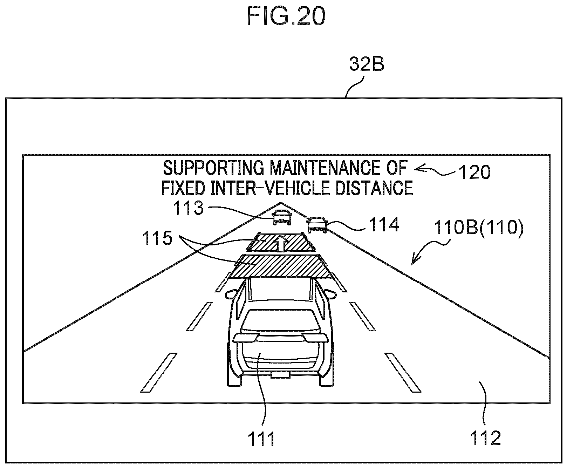

Fig. 20 is an example of an eleventh display as displayed on the multimedia display 32B. Specifically, Fig. 20 illustrates an example of display of a particular image 110B that is the particular image 110 corresponding to the explanatory information 100B, 100C, 100D illustrated in Fig. 17 to Fig. 19.

The particular image 110B illustrated in Fig. 20 is configured including an ego vehicle image 111, a road image 112, an other-vehicle image 113, an other-vehicle image 114, and bar images 115.

The other-vehicle image 113 illustrates another vehicle positioned in the same lane as the ego vehicle image 111 and at the front side in the progression direction thereof. The other-vehicle image 114 illustrates yet another vehicle positioned in a lane to the right of the ego vehicle image 111 and at the front side in the progression direction thereof.

The bar images 115 illustrate an inter-vehicle distance between the ego vehicle image 111 and the other-vehicle image 113. In Fig. 20, two substantially rectangular shaped bar images 115 are displayed between the ego vehicle image 111 and the other-vehicle image 113, thereby indicating that the vehicle 10 is cruising under ACC execution while an inter-vehicle distance is being maintained as indicated by the two bar images 115.

Moreover, in Fig. 20, a "supporting maintenance of fixed inter-vehicle distance" explanation regarding the particular image 110B is displayed as the text information 120.

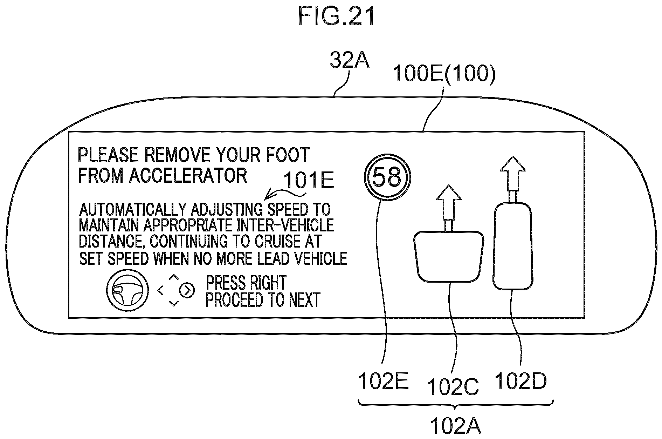

Fig. 21 illustrates an example of a fifth display as displayed on the meter display 32A. Specifically, Fig. 21 illustrates an example of a display of explanatory information 100E indicating a fifth explanation related to ACC as the explanatory information 100.

The explanatory information 100E illustrated in Fig. 21 is configured including a notification information 101E and image information 102A displayed at the right side of the notification information 100E.

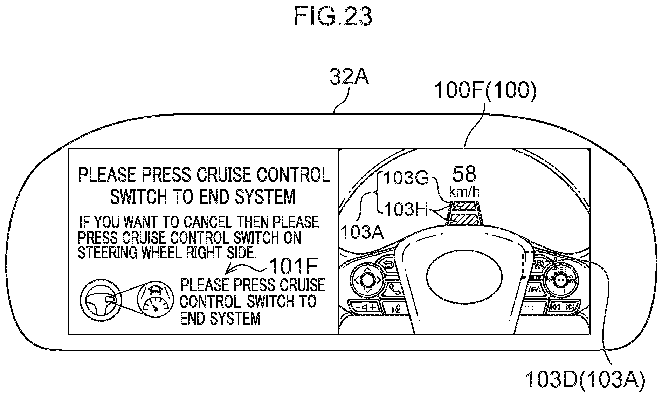

The notification information 101E indicates a notification to the driver. For example, the notification information 101E uses text and an image to notify the driver of the driving operation that should be performed by the driver in practice mode, and of the switch of the various switches 40 that should be operated to progress to the next explanatory information 100F (see Fig. 23).

The image information 102A illustrated in Fig. 21 is changed from the image information 102A illustrated in Fig. 15 in that a vehicle speed image 102E indicating a different vehicle speed to the vehicle speed image 102B is displayed. The current vehicle speed illustrated here by the vehicle speed image 102E is 58 km/h.

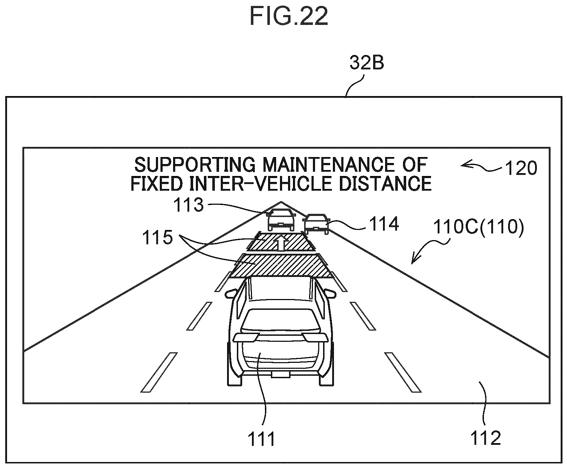

Fig. 22 illustrates an example of a twelfth display displayed on the multimedia display 32B. Specifically, Fig. 22 illustrates an example of a display of a particular image 110C that is the particular image 110 corresponding to the explanatory information 100E illustrated in Fig. 21.

The particular image 110C illustrated in Fig. 22 is configured including the ego vehicle image 111, the road image 112, the other-vehicle image 113, the other-vehicle image 114, and the bar images 115.

In the particular image 110C illustrated in Fig. 22, the inter-vehicle distance between the ego vehicle image 111 and the other-vehicle image 113 is shorter than in the particular image 110B illustrated in Fig. 20. This is because the CPU 51 of the control ECU 50 has functioned as the output control unit 51C and changed the particular image 110 displayed on the multimedia display 32B according to the change in the explanatory information 100 displayed on the meter display 32A. The examples illustrated in Fig. 20 and Fig. 22 illustrate a case in which the inter-vehicle distance between the ego vehicle image 111 and the other-vehicle image 113 has become shorter based on the vehicle speed having increased between before and after execution of ACC in practice mode.

Moreover, in Fig. 22 a "supporting maintenance of fixed inter-vehicle distance" explanation regarding the particular image 110C is displayed as the text information 120.

Fig. 23 illustrates an example of a sixth display as displayed on the meter display 32A. Specifically, Fig. 23 illustrates an example of display of explanatory information 100F indicating a sixth explanation related to ACC as the explanatory information 100.

The explanatory information 100F illustrated in Fig. 23 is configured including notification information 100F, and image information 103A displayed at the right side of the notification information 101F.

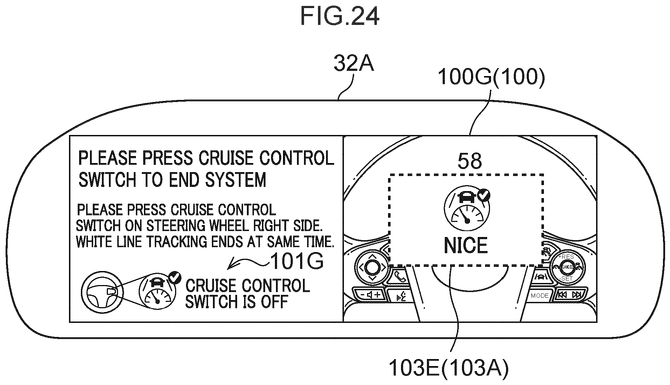

The notification information 101F illustrates a notification to the driver. For example, the notification information 101F uses text and an image to notify the driver of the switch of the various switches 40 that should be operated to progress to the next explanatory information 100G (see Fig. 24).

The image information 103A illustrated in Fig. 23 has display content of the road image 103G that is changed from the image information 103A illustrated in Fig. 17. Specifically, based on the ACC being executed in practice mode the road image 103G illustrated in Fig. 23 has two bar images 103H added to the road image 103G illustrated in Fig. 17 to indicate an inter-vehicle distance between the vehicle 10 and the lead vehicle to the vehicle 10.

The image information 103A illustrated in Fig. 23 instructs the driver to operate the cruise control switch 49 by emphasizing the surroundings of the switch image 103D by surrounding with a broken line.

Fig. 24 illustrates an example of a seventh display as displayed on the meter display 32A. Specifically, Fig. 24 illustrates an example of display of explanatory information 100G indicating a seventh explanation related to ACC as the explanatory information 100.

The explanatory information 100G illustrated in Fig. 24 is configured including notification information 101G, and image information 103A displayed at the right side of the notification information 101G.

The notification information 101G indicates a notification to the driver. For example, the notification information 101G uses text and an image to notify the driver that operation has been performed of the correct switch of the various switches 40.

The image information 103A illustrated in Fig. 24 is displayed with a response image 103E similar to the image information 103A illustrated in Fig. 18.

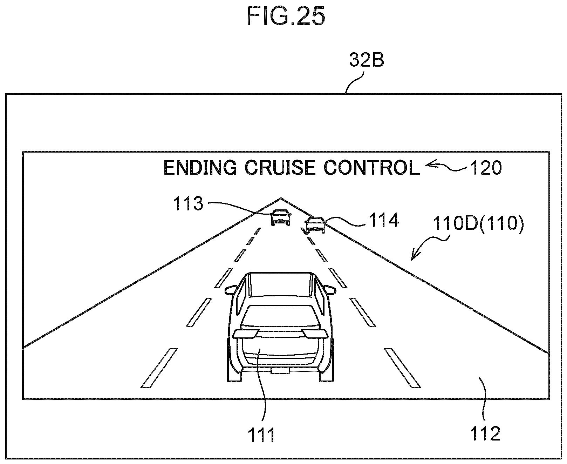

Fig. 25 is an example of a thirteenth display as displayed on the multimedia display 32B. Specifically, Fig. 25 illustrates an example of display of a particular image 110D that is the particular image 110 corresponding to the explanatory information 100F, 100G illustrated in Fig. 23 and Fig. 24.

The particular image 110D illustrated in Fig. 25 is configured including the ego vehicle image 111, the road image 112, the other-vehicle image 113, and the other-vehicle image 114.

The particular image 110D illustrated in Fig. 25 has the bar images 115 erased from the particular image 110C illustrated in Fig. 22. The examples illustrated in Fig. 22 and Fig. 25 illustrate a case in which the bar images 115 have been erased based on ACC having ended in practice mode.

Moreover, in Fig. 25 an "Ending cruise control" explanation regarding the particular image 110D is displayed as the text information 120.

An explanation has been given above regarding output content related to the practice mode of the third exemplary embodiment using Fig. 15 to Fig. 25, however in practice mode output content other than that illustrated in the drawings may be output. For example, the home screen illustrated in Fig. 6, the selection screen illustrated in Fig. 7, etc. as described in the first exemplary embodiment may be displayed on the multimedia display 32B prior to starting practice mode. Moreover, although the road image 112 displayed on the multimedia display 32B above is an image illustrating a straight path on which the vehicle 10 is traveling, an image illustrating a curved path may be employed when the vehicle 10 is traveling along a curved path. Further, output content to indicate that the practice mode has ended using text and images etc. may be displayed after the particular image 110D illustrated in Fig. 25 has been displayed on the multimedia display 32B for a fixed period of time.

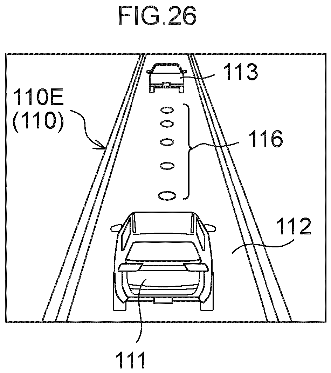

In the above, the particular image 110 has been explained for cases in which ACC is not being executed, and for cases in which ACC is being executed, in practice mode using the Fig. 16, Fig. 20, Fig. 22, and Fig. 25. Specifically, cases in which ACC is not being executed in practice mode are those in which the bar images 115 are not displayed between the ego vehicle image 111 and the other-vehicle image 113 as in the particular image 110A of Fig. 16 and the particular image 110D of Fig. 25, indicating that the vehicle 10 is in a state of manual driving. Moreover, cases in which ACC is being executed in practice mode are those in which the bar images 115 are displayed between the ego vehicle image 111 and the other-vehicle image 113 as in the particular image 110B of Fig. 20 and the particular image 110C of Fig. 22, indicating that the vehicle 10 is in a state of autonomous driving. In this manner, the CPU 51 of the control ECU 50 is able to differentiate the display content of the particular image 110 according to whether or not an autonomous driving function or driving assistance function is being executed in practice mode. As another example, the CPU 51 displays the particular image 110E illustrated in Fig. 26 on the multimedia display 32B in cases in which a particular autonomous driving function that allows the driver to adopt a hands-off state during a traffic jam is being executed in practice mode.

The particular image 110E illustrated in Fig. 26 is configured including the ego vehicle image 111, the road image 112, the other-vehicle image 113, and an inter-vehicle distance image 116.

In the inter-vehicle distance image 116, the inter-vehicle distance is illustrated by five circles between the ego vehicle image 111 and the other-vehicle image 113. In Fig. 26, the inter-vehicle distance image 116 being displayed between the ego vehicle image 111 and the other-vehicle image 113 indicates that while the particular autonomous driving function is being executed a hands-off state may be adopted due to the vehicle 10 cruising autonomously and maintaining the inter-vehicle distance as illustrated by the inter-vehicle distance image 116.

As described above, the CPU 51 of the control ECU 50 causes the explanatory information 100 indicating an explanation related to the autonomous driving function or driving assistance function being executed in practice mode to be displayed on the meter display 32A. The CPU 51 then displays, on the multimedia display 32B, the particular image 110 illustrating the vehicle 10 and the surrounding conditions of the vehicle 10 corresponding to the explanatory information 100 from a viewpoint of looking at the traveling vehicle 10 from a virtual viewpoint. The control ECU 50 is thereby able to provide the driver with information related to practice mode using two display devices 32.

Moreover, the CPU 51 of the control ECU 50 changes the particular image 110 displayed on the multimedia display 32B according change in the explanatory information 100 for display on the meter display 32A. The control ECU 50 is thereby able to impart an integrated feeling to the display content of the two display devices 32, and is able to raise the level of interest of the driver in practice.

### Other

As long as a specific system of the vehicle 10 for executing the practice mode is started up, the practice mode described in the above exemplary embodiments may be executed even in a state in which the vehicle 10 is not able to travel, in other words even in a state in which power is not being supplied to the power circuit that causes the vehicle 10 to travel. As an example, this specific system may be started up automatically by a smart key of the vehicle 10 being inside the vehicle. Then in the vehicle 10 the lock on the steering wheel 70 is unlocked, based on the specific system being started up, and operation on the various switches 40 is enabled. Thereby in the practice mode, the driver is able to operate the steering wheel 70, the various switches 40, and the like.

In the above exemplary embodiments, the driver may pause and end the practice mode being executed at a freely selected timing by operating a specific switch of the various switches 40 during practice mode execution.

In the above exemplary embodiments, the CPU 51 of the control ECU 50 may use the output device 30 to propose execution of the practice mode to the driver.

For example, the CPU 51 may propose execution of the practice mode in cases in which a particular tendency appears in the traveling history of the vehicle 10. Specifically, as the particular tendency, the CPU 51 may propose execution of the practice mode related to an autonomous driving function or driving assistance function executable when traveling on an expressway when a number of times of traveling on an expressway per unit time is a specific number or greater.

Moreover, the CPU 51 may propose execution of the practice mode in cases in which a navigation route set in the vehicle 10 includes a particular route. Specifically, the CPU 51 may propose execution of the practice mode related to an autonomous driving function or driving assistance function executable when traveling on an expressway in cases in which an expressway is included as the particular route.

Moreover, the CPU 51 may propose execution of the practice mode in cases in which a particular operation has been performed on the various switches 40 by the driver during travel of the vehicle 10. Specifically, the CPU 51 may propose execution of the practice mode related to a driving assistance function A, in cases in which, as the particular operation, the switch related to execution of the driving assistance function A of the various switches 40 has been operated in a state in which a driving assistance function B, which is a prerequisite to execution of the driving assistance function A, has not been executed.

In the above exemplary embodiments, the CPU 51 of the control ECU 50 may set a specific limit to the autonomous driving functions and driving assistance functions executable during travel of the vehicle 10 according to how much progress has been made in practice by the driver in the practice mode. For example, the CPU 51 may limit the autonomous driving functions and driving assistance functions executable during travel of the vehicle 10, in other words in a real environment, to those for which practice in practice mode has been completed. Moreover, in cases in which a new autonomous driving function or driving assistance function (hereafter referred to as "new function") has become available to add to the vehicle 10, the CPU 51 may permit download of a program to execute the new function limited to after completion of practice in practice mode according to the new function.

In the above exemplary embodiments, the CPU 51 of the control ECU 50 may impart a privilege to a driver according to how much progress has been made in practice by the driver in plural practice modes. For example, the CPU 51 may enable a new function to be added to a vehicle 10 of a driver whose degree of practice progress has satisfied a specific standard earlier than to a vehicle 10 of a driver whose degree of practice progress has not satisfied the specific standard. Moreover, the CPU 51 may prohibit download of a program to execute a new function in a vehicle 10 of driver whose degree of practice progress has not satisfied the specific standard until the specific standard has been satisfied.

In the above exemplary embodiments, the display devices 32 are provided to the instrument panel 12, the center console 14, the meter panel 16, or the like. However, there is no limitation thereto, and the display device 32 may be a head-up display (HUD). In such cases the CPU 51 of the control ECU 50 may display information related to the practice mode on the head-up display, and may display information related to the practice mode on the head-up display and on plural display devices 32, such as the meter display 32A, the multimedia display 32B, and the like.

In the above exemplary embodiments, the information related to the practice mode is output using the display devices 32 from the output device 30. However, there is no limitation thereto, and the information related to the practice mode may be output using plural output devices 30 of the display device 32 and the speaker 34. Moreover, other than the display device 32 and the speaker 34, the information related to the practice mode may be output using a non-illustrated output device 30 such as a lamp or a buzzer. Namely, the output device 30 for outputting the information related to practice mode is not particularly limited. Moreover, there is no particular limitation to the output content of the information related to the practice mode and, for example, the output content may be different from the response information 10D of Fig. 11A or the response information 10E of Fig. 11B as long as it enables the driver to ascertain whether correct operation or incorrect operation has been performed.

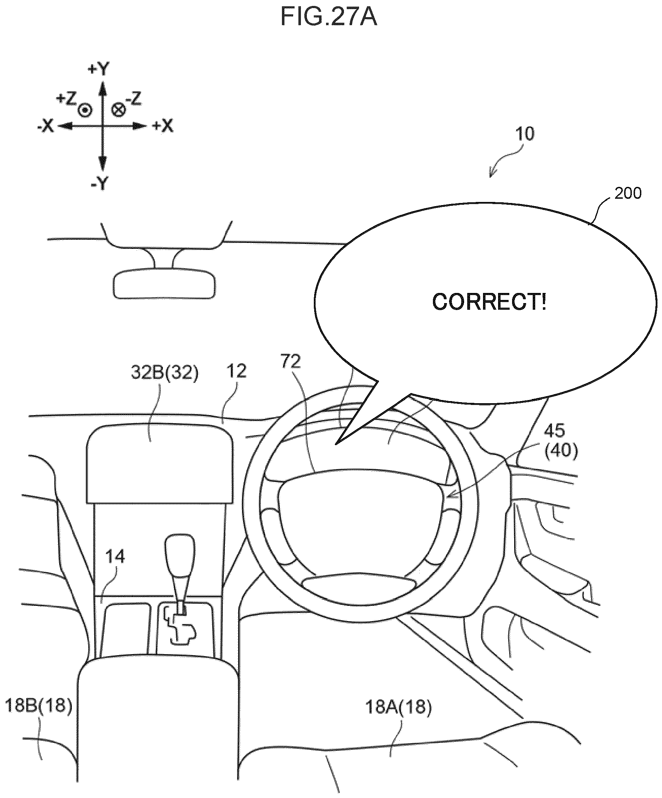

Description follows regarding an example in which the information related to the practice mode is output from the speaker 34 serving as the output device 30, with reference to Fig. 27A to Fig. 27D. Fig. 27A to Fig. 27D are diagrams in which output content by the speaker 34 provided to the meter panel 16 has been added to the diagram of Fig. 2 illustrating the interior of the vehicle 10 as viewed from the driver seat 18A. In Fig. 27A to Fig. 27D, the output content from the speaker 34 is represented by text inside a speech bubble 200.

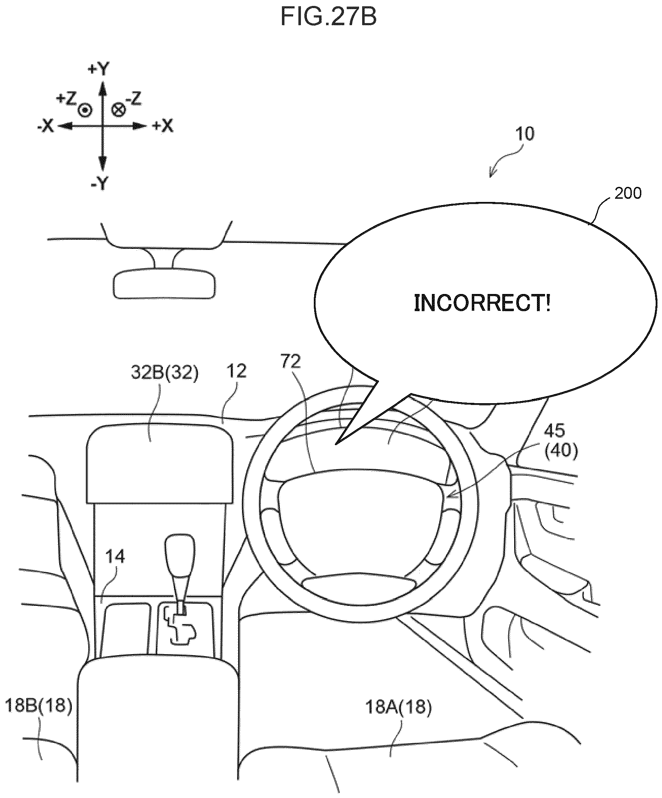

First, in Fig. 27A, output content by the speaker 34 is indicated for when correct operation has been performed by the driver for the specific operation. Text of "Correct!" is displayed inside the speech bubble 200 illustrated in Fig. 27A, indicating output content of audio "Correct!" from the speaker 34. Next, in Fig. 27B, output content from the speaker 34 is illustrated for case in which for the specific operation incorrect operation has been performed by the driver. Text of "Incorrect!" is displayed inside the speech bubble 200 illustrated in Fig. 27B, indicating output content of audio "Incorrect!" from the speaker 34.

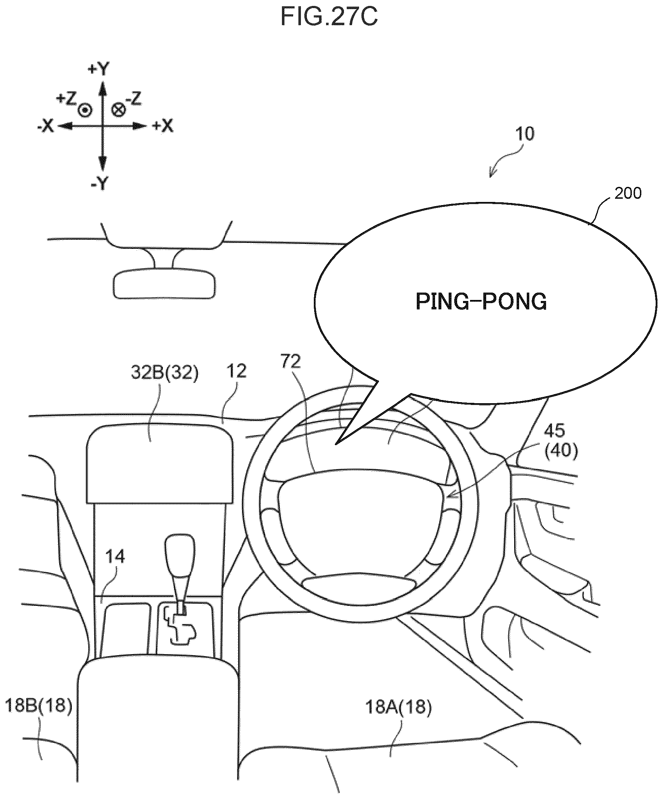

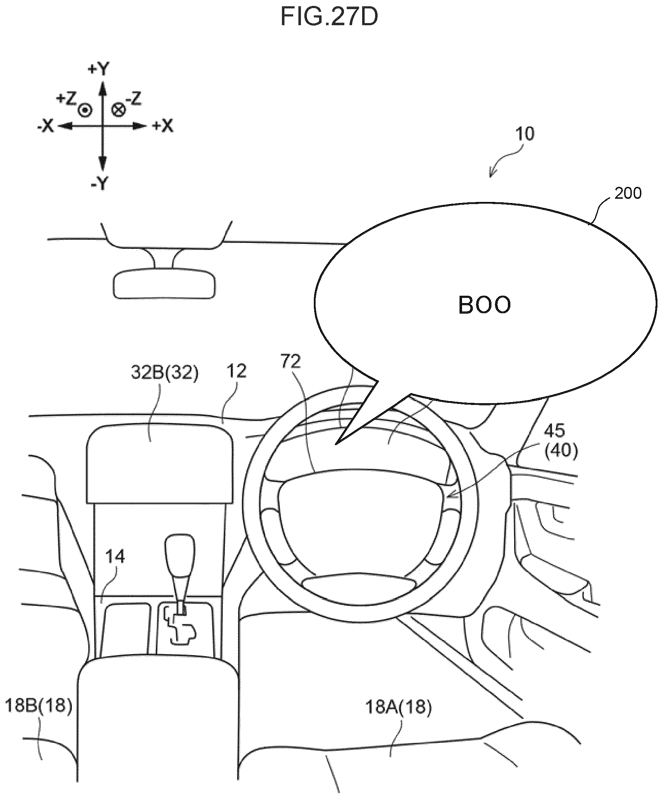

Note that the output content according to whether or not an input operation of the driver for the specific operation is correct or not from the speaker 34 is not limited to the verbal audio illustrated in Fig. 27A and Fig. 27B, and may be non-verbal audio. Fig. 27C illustrates output content by the speaker 34 for a case in which a correct operation has been performed by the driver for the specific operation. The text of "ping-pong" is displayed inside the speech bubble 200 illustrated in Fig. 27C indicating output content of non-verbal audio "ping-pong" from the speaker 34. Next, Fig. 27D illustrates output content from the speaker 34 for a case in which an incorrect operation has been performed by the driver for the specific operation. The text of "boo" is displayed inside the speech bubble 200 illustrated in Fig. 27D indicating output content of non-verbal audio "boo" from the speaker 34.

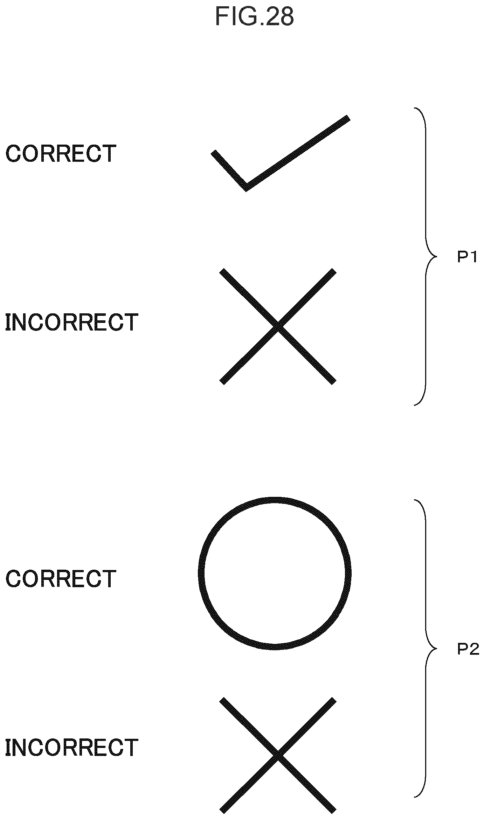

In the above exemplary embodiments, as a combination of an image representing a response to the correct operation by the driver and an image representing a response to an incorrect operation, an example has been illustrated of an image representing a "thumbs up" of the response information 10D illustrated in Fig. 11A and a "cross mark" of the response information 10E illustrated in Fig. 11B. However, combinations of images are not limited thereto, and combinations of various images may be employed. For example, an image indicating a response to a correct operation by the driver may be an image illustrating a "check mark (tick mark)", and an image indicating a response to an incorrect operation may be an image indicating a "cross mark", as illustrated by pattern P1 of Fig. 28. Moreover, an image indicating a response to a correct operation by the driver may be an image illustrating a "circle", and an image indicating a response to an incorrect operation may be an image indicating a "cross mark", as illustrated by pattern P2 of Fig. 28. When displaying such images, the image indicating a response to correct operation by the driver may be represented in a color associated with correct, such as green, and the image indicating response to incorrect operation may be represented in a color associated with incorrect, such as red.

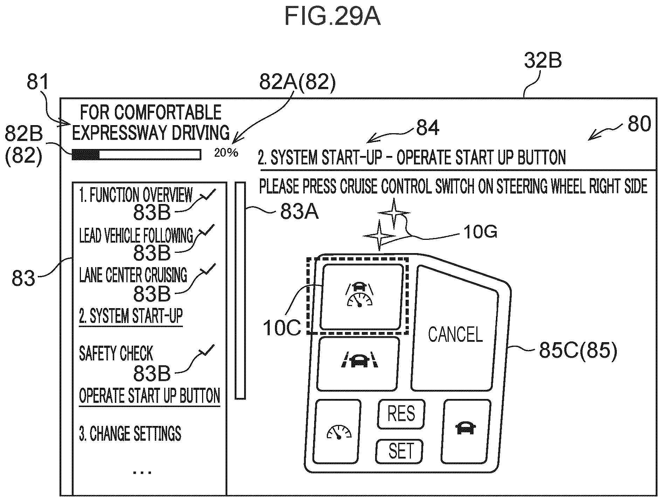

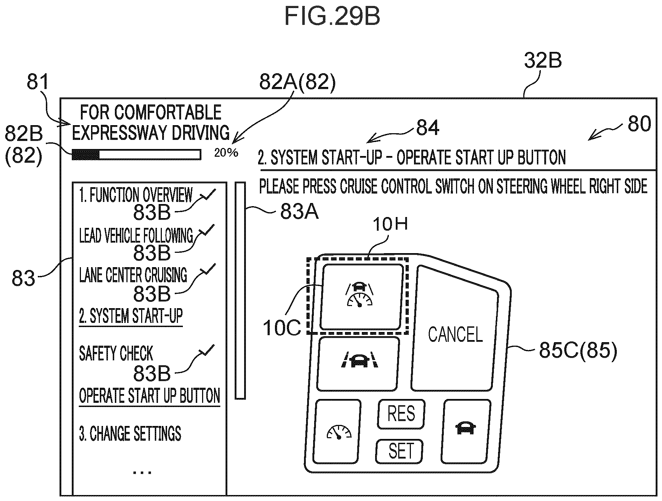

In the above exemplary embodiments, whether the input operation of the driver for the specific operation is correct or not may be indicated to the driver by emphasizing an image indicating the switch instructed in practice mode out of the various switches 40. Description of this follows with reference to Fig. 29A and Fig. 29B.

Fig. 29A illustrates an example of a fourteenth display as displayed on the multimedia display 32B. Fig. 29A illustrates a state after a correct operation has been performed by the driver to the operation instructed on the screen illustrated in Fig. 10, and specifically to operation of the cruise control switch 49. In Fig. 29A, response information 10G is displayed above the switch image 10C. As an example, the response by the response information 10G is execution of an animation of twinkling brilliantly using an image depicting "stars". In Fig. 29A the switch image 10C is emphasized by animation using the response information 10G, indicating that correct operation has been performed by the driver.

Fig. 29B illustrates an example of a fifteenth display as displayed on the multimedia display 32B. Fig. 29B illustrates a state after an incorrect operation has been performed by the driver to the operation of the cruise control switch 49 instructed on the screen illustrated in Fig. 10. In Fig. 29B response information 10H is displayed at the periphery of the switch image 10C. As an example, the response of the response information 10H is to flash an image illustrating a "broken line box" in a specific color (for example, red). Fig. 29B indicates that the incorrect operation has been performed by the driver by emphasizing the switch image 10C by causing the response information 10H to flash in the specific color.

In the above exemplary embodiments the CPU 51 of the control ECU 50 causes the explanatory information 100 to be displayed on the meter display 32A, and causes the particular image 110 to be displayed on the multimedia display 32B. However, there is no limitation thereto, and the CPU 51 may display the explanatory information 100 on the multimedia display 32B, and display the particular image 110 on the meter display 32A. Namely, the display device 32 on which the explanatory information 100 and the particular image 110 is displayed is not particularly limited.

In the above exemplary embodiments, the practice modes enable practice of both autonomous driving functions and driving assistance functions of the vehicle 10. However, there is no limitation thereto, and the practice modes may enable only practice of the autonomous driving functions, or may enable only practice of the driving assistance functions.

In the above exemplary embodiments the particular processing illustrated in Fig. 13 was executed by the control ECU 50. However, there is no limitation thereto, and the particular processing may be executed by the control ECU 50 in cooperation with another ECU.

Note that particular processing executed by the CPU 51 reading and executing software (a program) in the above exemplary embodiments may be executed by various processors other than a CPU. Examples of such processors include programmable logic devices (PLD) that allow circuit configuration to be modified post-manufacture, such as field-programmable gate arrays (FPGA), and dedicated electronic circuits, these being processors including a circuit configuration custom-designed to execute specific processing, such as application specific integrated circuits (ASIC). Moreover, the particular processing may be executed by any one of these various types of processor, or may be executed by a combination of two or more of the same type or different types of processor (such as plural FPGAs, or a combination of a CPU and an FPGA). The hardware structure of these various types of processors is more specifically an electronic circuit combining circuit elements such as semiconductor elements.

Moreover, although the above exemplary embodiments described a mode in which the information processing program 52A was pre-stored (installed) on the ROM 52, there is no limitation thereto. The information processing program 52A may be provided in a format stored on a non-transitory storage medium such as a compact disc read only memory (CD-ROM), digital versatile disc read only memory (DVD-ROM), universal serial bus (USB) memory, or the like. Moreover, the information processing program 52A may be in a format downloadable from an external device over a network.

## Claims

1. An information processing device (50) comprising:
a control unit (51B, 51C) configured to execute a practice mode for practicing at least one of an autonomous driving function or a driving assistance function of a vehicle (10), and output, from an output device (30), output content according to whether or not an input operation of a user, to a specific operation related to execution of the autonomous driving function or the driving assistance function instructed in the practice mode, is correct.

2. The information processing device (50) of claim 1, wherein the control unit (51B, 51C) is configured to further output, from the output device (30), progress information (64, 82, 96) indicating how much progress has been made in practice by the user in the practice mode being executed.

3. The information processing device (50) of any one of claims 1 and 2, wherein the control unit (51B, 51C) is configured to further:
display question information (84, 85D) indicating a question related to the specific operation in the practice mode on a display device (32A, 32B) serving as the output device (30); and
end or continue the practice mode according to whether or not an answer of the user to a question represented by the question information (84, 85D) is correct.

4. The information processing device (50) of any one of claims 1 to 3, wherein the control unit (51B, 51C) is configured to further display progress information (64, 82, 96) indicating how much progress has been made in practice by the user in the autonomous driving function and the driving assistance function executable in the practice mode, as a summary on a display device (32A, 32B) serving as the output device (30).

5. The information processing device (50) of any one of claims 1 to 4, wherein the control unit (51B, 51C) is configured to further display, for each of a plurality of selection icons (63) for selecting the autonomous driving function or the driving assistance function to be executed in the practice mode displayed on a display device (32A, 32B) serving as the output device (30), progress information (64, 82, 96) indicating how much progress has been made in practice by the user in the autonomous driving function or the driving assistance function corresponding to each of the selection icons (63).

6. The information processing device (50) of any one of claims 1 to 5, wherein the control unit (51B, 51C) is configured to further:
display explanatory information (100) indicating an explanation related to the autonomous driving function or the driving assistance function being executed in the practice mode, on a first display device (32A) serving as the output device (30); and
display, on a second display device (32B) serving as the output device (30) and different from the first display device (32A), a particular image (110) illustrating the vehicle (10) and surrounding conditions of the vehicle (10) according to the explanatory information (100) from a viewpoint of looking at the vehicle (10) traveling from a virtual viewpoint.

7. The information processing device (50) of claim 6, wherein the control unit (51B, 51C) is configured to further change the particular image (110) for display on the second display device (32B) according to a change in the explanatory information (100) for display on the first display device (32A).

8. An information processing method executed by a computer (50), the information processing method comprising:
executing a practice mode for practicing at least one of an autonomous driving function or a driving assistance function of a vehicle (10); and
outputting, from an output device (30), output content according to whether or not an input operation of a user, to a specific operation related to execution of the autonomous driving function or the driving assistance function instructed in the practice mode, is correct.

9. An information processing program (52A) executed by a computer (50), the information processing comprising:
executing a practice mode for practicing at least one of an autonomous driving function or a driving assistance function of a vehicle (10); and
outputting, from an output device (30), output content according to whether or not an input operation of a user, to a specific operation related to execution of the autonomous driving function or the driving assistance function instructed in the practice mode, is correct.
